# DEMANDE DE BREVET EUROPEEN

(11) **EP 0 735 644 A2**
(43) Date de publication de la demande: **02.10.1996**
(21) Numéro de dépôt: 96500033.4
(22) Date de dépôt: 20.03.1996
(51) Int. Cl.: H02K 5/15

(54) **Une carcasse de moteur électrique**

(30) Priorité: 01.04.1995 ES 9500656
(71) Demandeur: BOMBAS ELECTRICAS, S.A. (BOELSA), E-17820 Banyoles (Gerona) (ES)
(72) Inventeur: Pages, Josep, 17820 Banyoles (ES)
(74) Mandataire: SUGRANES - VERDONCES - FERREGÜELA

(57) **Abrégé**

La bride-palier (2) comprend un orifice (14) doté d'un tronçon à peu près cylindrique (6) adapté pour recevoir le palier correspondant (7), de façon à ce que l'arbre (3) du moteur dépasse hors de la carcasse sur une portion extrême arrière (8) adaptée pour supporter le ventilateur (4). La bouche postérieure externe de l'orifice de la bride-palier est dotée d'un court tronçon coaxial en forme de cône tronqué (9), plus large, adapté pour recevoir la pression d'une rondelle (12) dont le bord externe vient se loger dans l'échelon que forme la base interne la plus large (11) de cette portion en forme de cône tronqué.

Entre la rondelle (12) et le ventilateur (4) se trouve un joint d'étanchéité coulissant (13) qui ferme hermétiquement le moteur.

## Description

La présente invention concerne une carcasse de moteur électrique, analogue à celles dont la partie recouvrant le moteur et la bride-palier de l'arbre du moteur et du ventilateur est constituée par une seule pièce, en fonte d'aluminium de préférence, équipée en sa partie arrière, qui constitue la bride-palier d'un orifice doté d'un tronçon à peu près cylindrique adapté pour recevoir le palier correspondant, de façon à ce que l'arbre dépasse hors de la carcasse sur une portion extrême arrière adaptée pour supporter le ventilateur.

### État de la technique.-

Il existe des moteurs électriques dont la carcasse en une seule pièce compose la bride-palier et la partie qui recouvre le moteur.

Dans ce type de carcasses, dont la partie où vient se loger le moteur et la bride-palier arrière est d'une seule pièce, on pratique un orifice arrière, le plus grand possible, pour pouvoir usiner le logement du palier correspondant.

Pour clore cet orifice, on dispose un couvercle qui reçoit le ventilateur et est équipé d'un système de labyrinthe assurant une fermeture hermétique entre la partie arrière du moteur et le palier postérieur de l'arbre.

Ce système présente un inconvénient: l'usinage du siège du palier est très malaisé et complexe, car la bouche externe de l'orifice présente un diamètre supérieur à celui du siège usiné, ce qui rend l'opération d'usinage plus difficile et plus onéreuse.

### Description de l'invention.-

La carcasse du moteur électrique qui fait l'objet de la présente invention supprime les inconvénients indiqués ci-dessus et fournit une solution efficace, économique et simple pour clore l'orifice arrière de la carcasse. En son essence, la carcasse en question se caractérise en ce que la bouche arrière externe de l'orifice de la bride-palier est doté d'une courte portion coaxiale en forme de cône tronqué, plus large, dont le diamètre de la base externe est moins large que celui de la base interne, cette portion en forme de cône tronqué étant adaptée pour recevoir la pression d'une rondelle dont le bord externe vient se loger dans l'échelon que forme la base interne la plus large de cette portion en forme de cône tronqué.

Selon une autre caractéristique de l'invention, entre la rondelle et le ventilateur prend place un joint d'étanchéité coulissant qui ferme hermétiquement le moteur.

### Brève description des dessins.-

Les dessins joints à ce document illustrent, à titre d'exemple non limitatif, un type de réalisation de la carcasse qui fait l'objet de la présente invention.

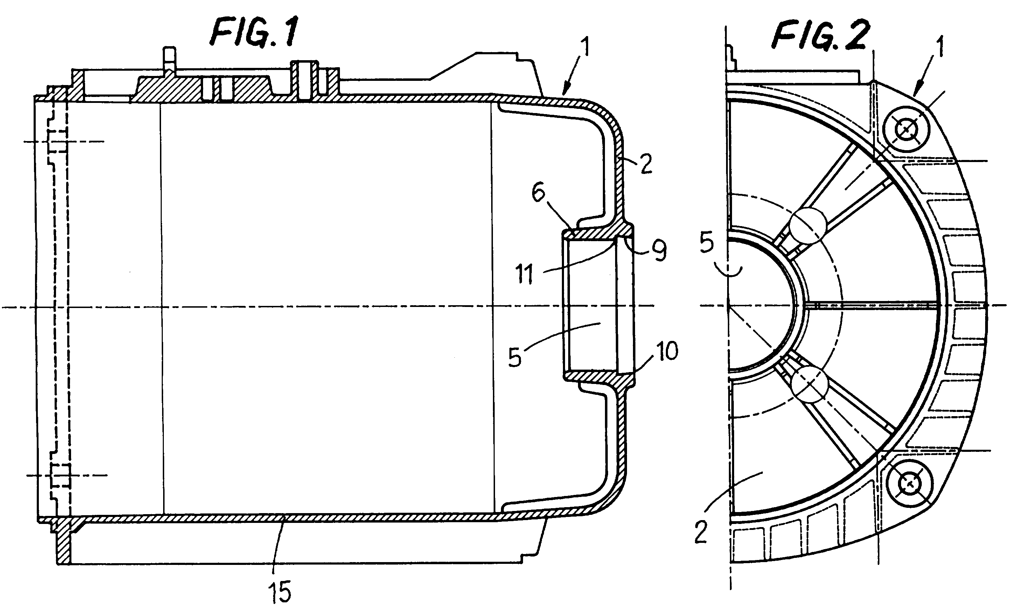

La fig. 1 est une coupe longitudinale de la partie postérieure de la carcasse du moteur électrique auquel s'applique l'invention;
La Fig. 2 est une élevation frontale de la moitié de cette partie de carcasse;
Les fig. 3 et 4 sont des vues partielles en élévation et en coupe longitudinale de la partie de la carcasse où vient se loger la bride-palier, qui montrent chacune une étape du mouvement qu'effectue la rondelle dans son logement;

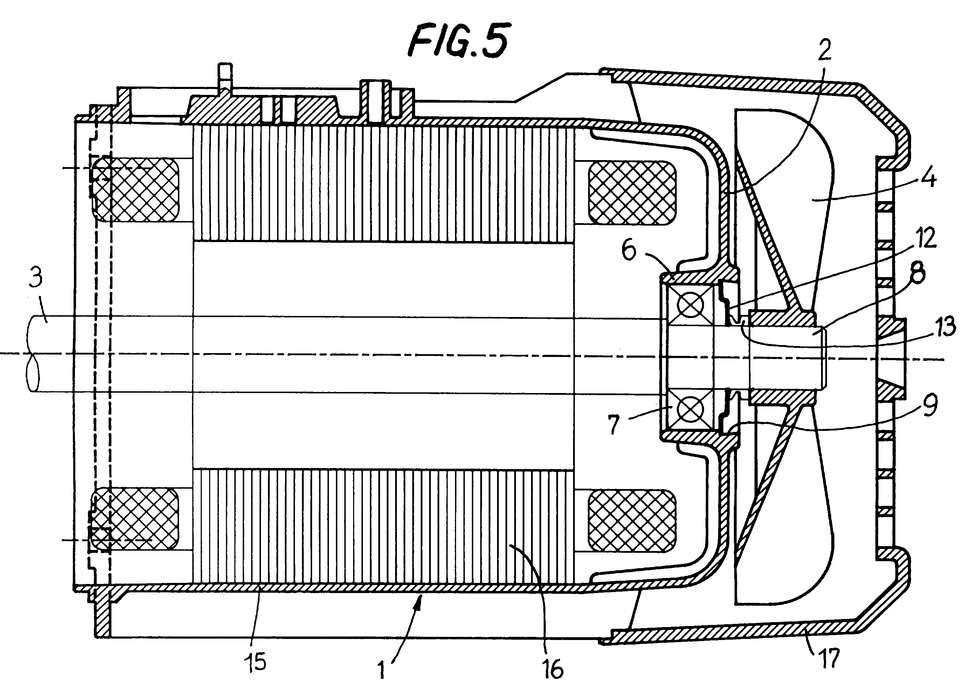

La Fig. 5 est une vue analogue à la Fig. 1, assortie d'une ébauche des parties constituant la portion arrière du moteur électrique.

On peut observer sur ces dessins que la carcasse (1) du moteur électrique qui fait l'objet de cette invention est formée d'une seule pièce (15), en fonte d'aluminium de préférence, en sa partie qui enveloppe le stator (16) du moteur et la bride-palier (2) de l'arbre (3) du moteur et du ventilateur (4).

En sa partie arrière, qui constitue la bride-palier (2), cette pièce est pourvue d'un orifice (5) doté d'une portion à peu près cylindrique (6) adaptée pour recevoir le palier (7) dans lequel vient se loger la partie arrière (8) de l'arbre (3) du moteur. Cette partie arrière (8) dépasse hors de la bride-palier (2) et supporte le ventilateur (4).

La bouche arrière externe de l'orifice (5) de la bride-palier (2) est dotée d'une courte portion en forme de cône tronqué (9) coaxial, plus large que le reste de l'orifice (5), dont la base externe (10) est de moindre diamètre que la base interne (11).

Cette portion en forme de cône tronqué (9) est adaptée pour recevoir la pression d'une rondelle (12) susceptible de s'encastrer par son bord externe dans l'échelon que forme la base interne la plus grande (11) de la portion en forme de cône tronqué (9).

La rondelle (12), en acier inoxydable de préférence, a en principe la forme indiquée dans la Fig, 3, c'est-à-dire, une portion extrême (18) en forme de cône tronqué et une portion centrale (19) en forme de couronne circulaire plate. Dans ces conditions, la rondelle (12) est susceptible de s'introduire dans le fond de l'échelon formé par la base interne la plus grande (11) de la portion en forme de cône tronqué (9).

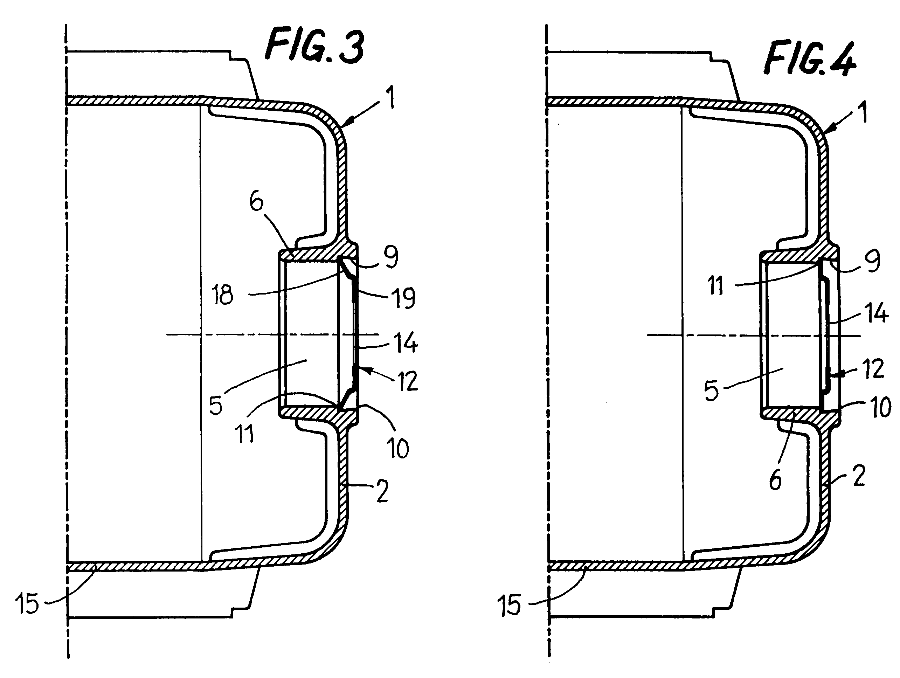

Une fois que la rondelle (12) se trouve dans la position de la Fig. 3, une pression est exercée sur elle en direction de l'arbre (3) de la pompe et vers l'intérieur de celle-ci; cette pression déforme la rondelle (12) jusqu'à ce qu'elle adopte la position illustrée par la Fig. 4 dans laquelle le bord de la rondelle (12) s'encastre dans l'échelon formé par la base (11) de la portion en forme de cône tronqué (9).

Entre l'orifice (14) de la rondelle (12) et le ventilateur (4) monté sur la partie arrière (8) de l'arbre (3), un joint coulissant d'étanchéité (13) est situé, qui ferme hermétiquement le moteur et empêche l'entrée de toute matière dans l'orifice (14).

Enfin, dans la partie arrière de la carcasse (1), est située un couvercle (17) qui protège le ventilateur (4).

La nature de l'invention ainsi que la manière de la mettre en pratique ayant été suffisamment décrites, faisons remarquer que tout ce qui n'en modifie, n'en dénature ou n'en change pas le principe fondamental peut faire l'objet de variations de détail, l'essentiel et la substance de cette demande de brevet étant résumés dans les revendications suivantes.

## Revendications

1. Carcasse (1) de moteur électrique, analogue à celles dont la partie (15) recouvrant le moteur et la bride-palier (2) de l'arbre (3) du moteur et du ventilateur est constituée par une seule pièce, en fonte d'aluminium de préférence, équipée en sa partie arrière, qui constitue la bride-palier, d'un orifice (14) doté d'un tronçon à peu près cylindrique (6) adapté pour recevoir le palier correspondant (7), de façon à ce que l'arbre dépasse hors de la carcasse sur une portion extrême arrière (8) adaptée pour supporter le ventilateur (4), caractérisée en ce que la bouche postérieure externe de l'orifice de la bride-palier est dotée d'un court tronçon coaxial en forme de cône tronqué (9), plus large, dont la base externe (10) a un diamètre plus petit que la base interne (11), ce tronçon étant adapté pour recevoir la pression d'une rondelle (12) dont le bord externe vient s'encastrer dans l'échelon que forme la base interne la plus large de cette portion en forme de cône tronqué.

2. Carcasse (1) du moteur électrique, selon la revendication 1, caractérisée en ce que entre la rondelle (12) et le ventilateur (4) se trouve un joint d'étanchéité coulissant (13) qui ferme hermétiquement le moteur.
